Europäisches Patentamt

European Patent Office

Office européen des brevets

(11) Numéro de publication: **0 257 164
B1**

(12) **FASCICULE DE BREVET EUROPEEN**

(45) Date de publication du fascicule du brevet:
06.06.90

(21) Numéro de dépôt: **86401849.4**

(22) Date de dépôt: **21.08.86**

(51) Int. Cl.⁵: **G05B 19/18**

(54) Dispositif pour le positionnement relatif d'un outil et d'une pièce à usiner.

(43) Date de publication de la demande:
02.03.88 Bulletin 88/9

(45) Mention de la délivrance du brevet:
06.06.90 Bulletin 90/23

(84) Etats contractants désignés:
CH DE GB IT LI SE

(56) Documents cités:
FR-A- 2 460 181
FR-A- 2 577 456

PATENT ABSTRACTS OF JAPAN,
vol. 8, no. 120 (M-300)[1557], 6 juin 1984; &
JP-A-59 24 947 (NIIGATA TEKKOSHO K.K.) 08-02-1984

(73) Titulaire: **Yvorra, Georges, 9 Rue du Baigneur,
F-75018 Paris(FR)**

(72) Inventeur: **Yvorra, Georges, 9 Rue du Baigneur,
F-75018 Paris(FR)**

(74) Mandataire: **Letheule, Jacqueline, 99, Avenue Ledru
Rollin, F-75011 Paris(FR)**

## Description

La présente invention concerne d'une façon générale des dispositifs destinés à assurer le positionnement précis d'un outil de machine-outil, tel que tour, fraiseuse, etc. par rapport à une pièce à usiner. Elle concerne plus particulièrement un dispositif électronique apte à indiquer avec une grande précision une position de référence d'un outil par rapport à une pièce à usiner.

Dans les machines-outils conventionnelles, le processus de centrage est effectué par des méthodes qui ne sont ni rapides, ni précises. En particulier, lorsque l'on souhaite un positionnement parfait d'une broche de machine-outil par rapport à la pièce à usiner, on fait généralement appel à une machine spéciale dite machine à pointer, qui est tout à fait complexe et onéreuse.

Cependant, lors d'un usinage classique, il est nécessaire pour le positionnement de la broche de faire appel à des accessoires spéciaux, parfois appelés «piges» généralement sous la forme de pièces cylindriques de tolérances très précises, qui sont mis en place sur la broche et amenés en affleurement avec un chant prédéterminé de la pièce à usiner, pour ainsi établir un positionnement relatif de la broche relativement précis. L'accessoire est ensuite remplacé par l'outil lui-même pour réaliser l'usinage. On comprend cependant que cette méthode de centrage est tout à fait fastidieuse en ce que de fréquents changements entre l'accessoire et les outils sont nécessaires pour obtenir une précision satisfaisante de l'usinage.

Par ailleurs, il est bien évident que cette méthode ne tient aucunement compte des imperfections de l'outil tels qu'ovalisation, usure irrégulière des dents de celui-ci, ou encore orientation non parfaitement horizontale (ou verticale, selon les cas) de l'outil.

Le document japonais JP-A 5 924 947 prévoit un circuit de mesure présentant des analogies avec la présente invention, en raison d'un trajet de courant passant aussi par la broche, mais nécessitant une isolation par un film d'huile.

Vu cet état de la technique, la revendication 1 part dans son préambule, d'un tel dispositif.

La présente invention vise à pallier les inconvénients précités et à proposer un dispositif de positionnement d'un outil de machine-outil qui permette d'atteindre une précision extrêmement élevées. Plus précisément, l'invention a pour objet de proposer un dispositif de positionnement qui opère alors que l'outil de coupe avec lequel le travail est à effectuer occupe sa position définitive sur la broche de la machine-outil, et que ledit outil est en rotation à vitesse souhaitée, pour ainsi assurer un positionnement de référence à l'état dynamique de la machine.

A cet effet, la présente invention concerne un dispositif de positionnement relatif d'un outil de machine-outil comprenant au moins une broche rotative (12) supportée par au moins un palier (14) lubrifié et destinée à entraîner l'outil ou la pièce, ce dispositif comprenant:

1. une source de courant constant à haute impédance interne servant à injecter un courant générateur de signaux d'inspections dans des circuits incluant broche (12)

2. des moyens de détection de plusieurs niveaux de tensions produites par plusieurs conditions d'opérations de la machine mesurées dans lesdits circuits,

3. un premier circuit électrique (12, 16, 18, 28) traversant la broche, l'outil, la pièce et le bâti de la machine étant réalisé lorsque le contact de l'outil avec la pièce est entamé,

4. des moyens de signalisation visuels ou sonores aptes à signaler à l'utilisateur ladite entrée en contact

5. un deuxième circuit électrique servant à détecter les anomalies et qui est caractérisé en ce que, le deuxième circuit électrique (12, 14, 20, 28) traverse la broche, le produit lubrifiant, le palier et le bâti de la machine, les résistances des deux circuits électriques sont caractérisées par des valeurs telles que lorsque le contact entre l'outil et la pièce est entamé, ce circuit devient préférentiel par rapport au circuit passant par le produit lubrifiant.

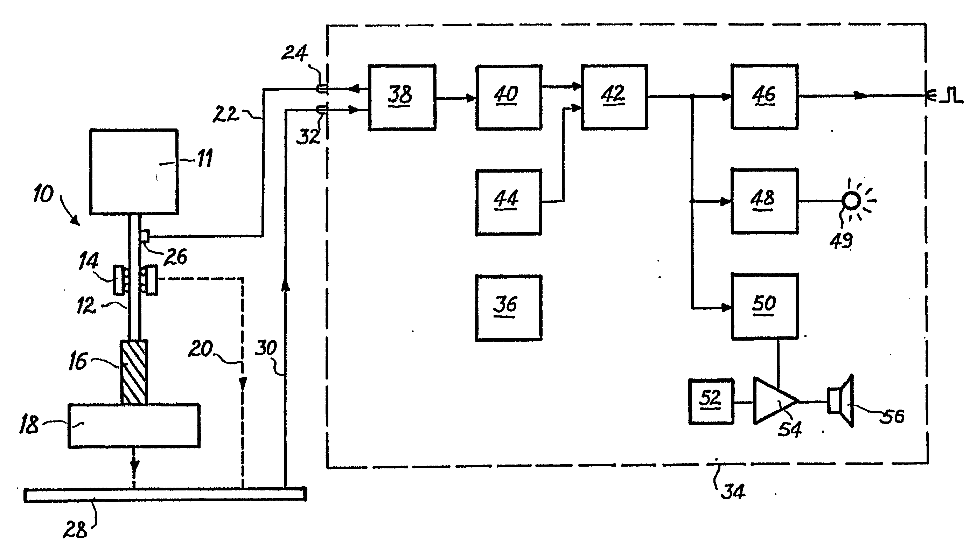

L'invention sera mieux comprise à la lecture de la description détaillée suivante d'un mode de réalisation préféré de celle-ci, donné à titre d'exemple et faite en référence au dessin annexé, sur lequel la figure unique est un schéma-bloc d'un dispositif de positionnement selon l'invention.

En référence au dessin est tout d'abord représentée schématiquement une machine-outil, dans le présent exemple du type fraiseuse, qui est globalement indiquée en 10 et qui comprend une broche 12 montée rotative sur le bâti de la machine par l'intermédiaire d'un jeu de roulements conventionnels 14 et apte à être entraînée en rotation par une unité de motorisation conventionnelle 11. Sur la broche 12 est monté un outil 16 (dans le cas présent une fraise) qui est agencé pour effectuer une coupe sur une pièce à fraiser 18 maintenue en place de façon appropriée par un étau (non représenté) ou directement sur la table de la machine-outil. Un premier trajet de courant électrique est défini par une sonde 22, qui est montée entre une première borne 24 d'un circuit électronique (décrit plus loin) et un collecteur rotatif 26, par exemple un collecteur à balais, agencé pour assurer le contact électrique entre la sonde 22 et la broche 12 de la machine. Le trajet comprend en outre la broche 12 elle-même, le jeu de roulements 14 et le bâti de la machine, indiqué schématiquement en 28 (le contact entre les roulements 14 et le bâti 28 étant schématisé par le trait pointillé 20). Un conducteur approprié 30 relie ledit bâti 28 à une seconde borne 32 du circuit électronique. Du fait de la présence de graisse de lubrification dans les roulements 14, ce premier trajet présente une résistance électrique non négligeable.

Un second trajet de courant, parallèle au premier, est apte à être réalisé lorsque l'outil de coupe 16 arrive au contact de la pièce à fraiser 18. En effet ces deux éléments sont dans les cas les plus fréquents en un matériau électriquement conducteur, l'outil 16 et la pièce à usiner 18 étant respectivement en contact électrique avec la broche 12 et le bâti 28 de la machine-outil. Ainsi, lorsque le contact entre l'outil et la pièce est établi, ce second trajet, de résistance électrique faible, est superposé au premier trajet relativement résistif mentionné plus haut, pour ainsi abaisser la valeur de la résistance entre les bornes 24 et 32 du circuit électronique, à des fins expliquées plus loin.

Le dispositif comprend en outre, comme mentionné ci-dessus, un circuit électronique, globalement indiqué en 34, qui comprend une source de tension continue régulée 36, de type conventionnel à pile ou alimentée par la tension du secteur, qui alimente les divers organes du circuit 34 (de manière non illustrée). On trouve en outre, indiqué en 38, un circuit à pont diviseur de tension qui inclut les bornes 24 et 32 mentionnées plus haut. Ainsi, on comprend que toute variation de la résistance électrique entre les bornes 24 et 32 va être convertie à la sortie du circuit 38 en une variation de tension correspondante. La sortie du circuit 38 est reliée à l'entrée d'un circuit de mise en form et d'amplification 40, qui est agencé pour d'une part filtrer le signal fourni par le pont diviseur 38, afin de le débarrasser de toutes ses informations non significatives, et pour d'autre part amplifier les variations de tension intialement très faibles de ce signal. La sortie du circuit de mise en form et d'amplification 40 est reliée à une première entrée d'un circuit comparateur 42. La seconde entrée de ce comparateur 42 est reliée à une unité de réglage de tension de seuil 44, à des fins expliquées plus loin. La sortie du comparateur 42 fournit de façon conventionnelle un signal à deux états qui est représentatif du signe de la différence entre les tensions présentes sur ses deux entrées. A titre d'exemple, le comparateur 42 pourra consister en un simple amplificateur opérationnel monté en boucle ouverte.

La sortie du circuit comparateur 42 est délivrée tout d'abord à un circuit de mise en forme et de mise à niveau, indiqué en 46, qui est agencé pour fournir à sa sortie un signal numérique représentatif du signal de sortie du comparateur 42 et compatible avec les niveaux logiques haut et bas usuellement présents dans les installations de commande numérique de machines-outils, à des fins expliquées plus loin.

La sortie du comparateur 42 est également appliquée à l'entrée d'un circuit de commande de signalisation lumineuse, globalement indiqué en 48, qui est apte à sélectivement allumer et éteindre une source lumineuse 49. Dans le présent mode de réalisation préféré, la source lumineuse consiste en une diode électroluminescente qui est montée à l'extrémité libre d'une balladeuse (non représentée), afin que l'opérateur de la machine-outil puisse, quelle que soit sa position de travail sur la machine, disposer cette diode électroluminescente à portée de ses yeux. Le circuit de commande de signalisation lumineuse 48 peut par exemple comprendre un relais temporisé ou analogue afin d'assurer l'éclairement de la source lumineuse pendant une durée appropriée dès que la sortie du comparateur 42 passe d'un premier état à un second état, comme on le verra plus loin.

La sortie du comparateur 42 est enfin appliquée à l'entrée d'un circuit de commande de signalisation sonore, globalement indiqué en 50, qui est agencé pour contrôler l'émission d'un son, fourni par un oscillateur approprié 52 et amplifié par un amplificateur 54, par un haut-parleur ou vibreur 56, et ce en réponse à un changement d'état prédéterminé de la sortie du comparateur 42, de façon analogue au circuit de signalisation lumineuse 48. De façon préférée, on utilisera comme onde sonore une onde carrée, que son fort contenu en harmoniques rend tout à fait audible dans un environnement bruyant tel que celui d'un atelier.

Le fonctionnement du dispositif décrit ci-dessus est le suivant. Lorsque l'on souhaite établir avec une grande précision une position de référence de l'outil 16 par rapport à la pièce à usiner 18, un tel positionnement étant nécessaire dès que l'on exige une opération d'usinage précise ou que l'on souhaite réaliser une pièce suivant des tolérances serrées, alors l'outil avec lequel doit être effectuée la passe est monté sur la broche 12, et éventuellement nettoyé pour le débarrasser de tout copeau métallique conducteur qui pourrait entraver la mesure, puis cette dernière est entraînée en rotation à vitesse appropriée par l'unité de motorisation 11. L'outil 16 est alors lentement rapproché d'un chant prédéterminé de la pièce 18, horizontalement ou verticalement selon le type de position de référence à établir. Tant que l'outil n'est pas en contact avec la pièce à usiner, alors le seul trajet de courant entre les bornes 24, 32 du dispositif électronique passe par la sonde 22, le collecteur 26, la broche 12, le jeu de roulements 14, le bâti 28, puis le conducteur de retour 30. L'expérience a montré que ce trajet présentait, en particulier du fait de la présence d'un film de graisse dans les roulements 14 en rotation, une certaine résistance électrique non négligeable, qui variait cependant quelque peu au cours de la rotation de la broche 12, mais qui était toujours supérieure à une valeur limite inférieure prédéterminée.

Cependant, l'arrivée de l'outil 16 au contact de la pièce 18 a pour effet, comme l'a montré l'expérience, de court-circuiter le premier trajet de courant tel que décrit ci-dessus, et de rendre la valeur de la résistance entre les bornes 24, 32 beaucoup plus faible qu'elle ne l'était précédemment. Une telle diminution de la résistance entre les bornes 24 et 32 dans le pont diviseur a pour effet immédiat de diminuer la tension présente sur la première entrée du comparateur. On choisira à cet égard une valeur de tension de seuil, fixée de façon précise à l'aide d'un potentiomètre multi-tours approprié dans l'unité de réglage 44, de manière à ce que cette diminution de tension fasse passer cette dernière d'une valeur supérieure à une valeur inférieure à la tension de seuil. Ainsi, ladite diminution de tension fait passer la sortie du comparateur d'un état haut, inactif, à un état bas, actif, ce qui déclenche le fonctionnement des circuits de commande de signalisation visuelle et sonore 48 et 50 pour ainsi informer immédiatement l'opérateur de la machine-outil que l'outil 16 est en affleurement par au moins une dent avec la pièce à usiner 18. L'opérateur dispose ainsi d'une information de position de référence de l'outil par rapport à un chant donné de la pièce qui est d'une grande fiabilité et d'une grande précision.

Par ailleurs, dans le cas d'une machine-outil à commande numérique, le changement d'état de la sortie du comparateur pourra être utilisé comme signal de commande de l'unité de commande numérique, par exemple dans le but de charger dans une mémoire une valeur de position instantanée de la broche de la machine-outil, destinée par exemple à tenir lieu de zéro flottant. Une position de référence outil/pièce d'une grande précision est ainsi obtenue d'une façon plus simple et efficace que dans l'art antérieur.

En outre, toujours en association avec les installations à commande numérique, le présent dispositif pourra être utilisé comme dispositif de sécurité dans le cas d'une erreur de commande de la translation de la table ou de l'outil coupant, pour interrompre immédiatement une telle translation lorsque l'outil arrive au contact de la pièce à usiner, selon une détection telle que décrite plus haut. Il pourra en outre être combiné à un détecteur de proximité pour une opération automatisée de mesure de position de référence, la translation de l'outil par rapport à la pièce étant ainsi fortement ralentie lorsque le contact affleurant pièce/outil est à même d'avoir lieu.

Il est à noter que le dispositif de la présente invention peut également être utilisé pour la détermination de l'état de paliers à roulements dans des machines de type quelconque. En effet, lorsqu'un roulement est usé ou manque de graisse, alors la résistance électrique entre sa bague intérieure et sa bague extérieure diminue, une telle diminution en deçà d'un seuil prédéterminé pouvant être détectée et signalée de la même manière que décrit plus haut.

Par ailleurs, il est clair qu'un avantage immédiat de la présente invention réside dans le fait que la mesure de position (ou détection d'affleurement) est effectuée directement avec l'outil qui doit effectuer la coupe, et en outre à l'état dynamique de la machine (c'est à dire avec l'outil en rotation à sa vitesse de consigne), ce qui permet de tenir compte et de compenser de façon inhérente les défauts d'un tel outil ou de sa fixation (usure des dents, montage non rigoureusement parallèle à un axe horizontal ou vertical, ovalisation, etc..), tels que constatés dans les conditions effectives de travail. A l'inverse, dans l'art antérieur, il était fréquemment nécessaire d'effectuer, après chaque positionnement de la broche de la machine, le remplacement d'un organe de mesure approprié par l'outil lui-même, avec toutes les incertitudes que cela comporte.

Bien entendu, la présente invention n'est aucunement limitée au mode de réalisation décrit. En particulier, les moyens électroniques de détection pourront être largement modifiés et faire appel à des principes tout autres que celui décrit plus haut, conformément aux connaissances de l'homme de métier. Par ailleurs, la liaison électrique sonde/broche pourra être effectuée par tout couplage inductif, capacitif, etc.

## Revendications

1. Dispositif de positionnement relatif d'un outil de machine-outil comprenant au moins une broche rotative (12) supportée par au moins un palier (14) lubrifié et destinée à entraîner l'outil ou la pièce, ce dispositif comprenant:

1. une source de courant constant à haute impédance interne servant à injecter un courant générateur de signaux d'inspections dans des circuits incluant ladite broche (12)

2. des moyens de détection de plusieurs niveaux de tensions produites par plusieurs conditions d'opérations de la machine mesurées dans lesdits circuits,

3. un premier circuit électrique (12, 16, 18, 28) traversant la broche, l'outil, la pièce et le bâti de la machine étant réalisé lorsque le contact de l'outil avec la pièce est entamé,

4. des moyens de signalisation visuels ou sonores aptes à signaler à l'utilisateur ladite entrée en contact

5. un deuxième circuit électrique servant à détecter les anomalies caractérisé en ce que, le deuxième circuit électrique (12, 14, 20, 28) traverse la broche, le produit lubrifiant, le palier et le bâti de la machine, les résistances des deux circuits électriques sont caractérisées par des valeurs telles que lorsque le contact entre l'outil et la pièce est entamé, ce circuit devient préférentiel par rapport au circuit passant par le produit lubrifiant.

2. Dispositif de positionnement relatif d'un outil de machine outil selon la revendication 1, caractérisé en ce qu'il comprend:

des moyens (38) pour injecter un courant électrique vers la broche (12) de la machine, et pour récupérer ce courant au niveau du bâti (28) de la machine des moyens (42) pour détecter les variations d'un paramètre électrique lié à la circulation dudit courant entre ladite broche et le bâti, et

des moyens de signalisation et/ou de commande (46, 48, 50) agencés pour être actionnés par les moyens de détection dès que ceux-ci ont détecté une variation dudit paramètre électrique correspondant à la transition entre un passage du courant le long d'un premier trajet, passant par des moyens de support en rotation (14) de la broche sur le bâti, et un passage du courant à la fois le long de ce premier trajet et le long d'un second trajet passant par l'outil (16) de la pièce à usiner (18) lorsque ceux-ci viennent en contact mutuel.

3. Dospositif selon la revendication 2, caractérisé en ce que les moyens d'injection de courant comprennent un pont diviseur de tension (38) dans lequel sont inclus la broche (12) et le bâti (28) de la machine-outil.

4. Dispositif selon l'une quelconque des revendications 2 et 3, caractérisé en ce que les moyens de détection comprennent un circuit comparateur de tensions (42) possédant deux entrées auxquelles sont respectivement appliqués une tension provenant des moyens d'injection et une tension provenant d'une unité de réglage de tension de seuil (44).

## Patentansprüche

1. Einrichtung zur relativen Positionierung eines Werkzeugs in einer Werkzeugmaschine, mit mindestens einer rotierenden Spindel (12), die in mindestens einem geschmierten Lager (14) aufgenommen und zum Antreiben des Werkzeugs oder des Werkstücks bestimmt ist, welche Einrichtung umfasst:

1. eine Gleichstromquelle mit hoher innerer Impedanz für das Einleiten eines Prüfsignale liefernden Stroms in Stromkreise, die die genannte Spindel (12) enthalten,

2. eine Einrichtung zum Erfassen mehrerer Pegel von durch mehrere Betriebsbedingungen der Maschine hervorgerufene Spannungen, die in den genannten Stromkreisen gemessen werden,

3. einen ersten Stromkreis (12, 16, 18, 28), der über die Spindel, das Werkzeug, das Werkstück und den Maschinenrahmen führt und geschlossen wird, wenn das Werkzeug gerade Kontakt mit dem Werkstück erhält, ist,

4. eine Einrichtung zur Abgabe sichtbarer oder hörbarer Signale, die dem Benutzer den entstandenen Kontakt erkennbar zu machen vermögen,

5. einen zweiten Stromkreis, der zum Erfassen der abweichenden Zustände dient,

dadurch gekennzeichnet, daß der zweite Stromkreis (12, 14, 20, 28) durch die Spindel, das Schmiermittel, das Lager und den Maschinenrahmen verläuft und daß die Widerstände in den beiden Stromkreisen eine solche Größe haben, daß, wenn das Wekzeug gerade Kontakt mit dem Werkstück erhält, dieser Stromkreis gegenüber dem durch das Schmiermittel verlaufenden Stromkreis bevorzugt wird.

2. Einrichtung zur relativen Positionierung eines Werkzeugs in einer Werkzeugmaschine, nach Anspruch 1, dadurch gekennzeichnet, daß sie umfaßt:
eine Einrichtung (38) zum Einleiten eines elektrischen Stroms in die Spindel (12) der Maschine und zum Entnehmen dieses Stroms im Bereich des Maschinenrahmens (28),
eine Einrichtung (42) zum Erfassen der Änderungen eines elektrischen Parameters, der mit dem Fließen des genannten Stroms zwischen der genannten Spindel und dem Rahmen verknüpft ist, und
eine signalgebende und/oder steuernde Einrichtung (46, 48, 50), die durch die Nachweiseinrichtung betätigt werden kann, sobald diese an dem genannten elektrischen Parameter eine Veränderung festgestellt hat, die dem Übergang von einem Stromdurchgang auf einer ersten Bahn, die durch die Drehlagerung (14) der Spindel auf dem Maschinenrahmen verläuft, zu einem gleichzeitigen Stromdurchgang auf der genannten ersten Bahn und einer zweiten Bahn entspricht, die durch das Werkzeug (16) und das zu bearbeitende Werkstück (18) verläuft, sobald diese einander berühren.

3. Einrichtung nach Anspruch 2, dadurch gekennzeichnet, daß die Einrichtung zum Einleiten von Strom eine Spannungsteilerbrücke (38) aufweist, welche die Spindel (12) und den Rahmen (28) der Werkzeugmaschine enthält.

4. Einrichtung nach Anspruch 2 oder 3, dadurch gekennzeichnet, daß die Erfassungseinrichtung einen Spannungskomparator (42) mit zwei Eingängen aufweist, denen eine von der Einrichtung zum Einleiten von Strom herrührende Spannung bzw. eine von einer Einrichtung (44) zur Schwellspannungseinstellung herrührende Spannung zugeführt werden.

## Claims

1. A device for relative positioning between a tool and a workpiece, including at least a rotating pin (12) supported by a bearing (14) which is lubrified and which drives the tool or workpiece, the device consisting of:

1. a high impedance internal supply current source injecting a current which generates inspection signals towards the circuits including said pin (12),

2. detection means at several levels of voltage produced by the machine's various types of operating conditions measured in said circuits,

3. a first electric circuit (12, 16, 18, 29) crossing the pin, the tool, the workpiece and the machine's mounting being established once the contact starts up between the tool and the workpiece,

4. visual or sound signals making the user aware that contact has been established,

5. a second electric signal detects anomalies, characterized in that the second electric circuit (12, 14, 20, 28) crosses the pin, the lubrifying product, the bearing and the motor mouting and the resistances of the two electric circuits are characterized by values such that when contact starts up between the tool and the workpiece, this particular circuit is preferred to the one which passes through the lubrifying product.

2. Relative positioning device for the tool of a machine tool in accordance with claim 1, characterized in that it includes:
means (38) to inject an electric current towards the machine's motor pin and to recuperate the current at the level of the motor mounting (28);
means (42) to detect the variations of an electric parameter linked to the circulation of said current between the pin and the mounting, and
signalling means and/or means of control (46, 48, 50) set up so as to be actuated by the detection means as soon as they have detected a variation in said electric parameter corresponding to the transition between the passage of the current along the first course passing in rotation (14) via the means of support of the mounting pin and the passage of current both along the first course and along the second course passing via the tool (16) of the piece to be machined (18), when they come into mutual contact.

3. Device according to claim 2, characterized in that the means of current injection include a tension dividing bridge (38) in which are included both the pin and the machine tool mounting (28).

4. Device according to one or other of claim 2 and 3, characterized in that the detection means comprise a circuit voltage comparator (42) having two entrances to which is respectively applied the voltage coming from the injection means and that from the threshold regulatory unit (44).

EP 0 257 164 B1